# EUROPÄISCHE PATENTSCHRIFT

(11) **EP 2 570 468 B1**
(45) Veröffentlichungstag und Bekanntmachung des Hinweises auf die Patenterteilung: **27.11.2013**
(21) Anmeldenummer: 11181145.1
(22) Anmeldetag: 13.09.2011
(51) Int. Cl.: C09K 11/77, B42D 15/00, G07D 7/12

(54) **Anti-Stokes-Leuchtstoff als Sicherheitsmerkmal in Sicherheitsdokumenten**
Anti-stokes luminescent substances and use thereof in security documents
Substance luminescente Anti-Stokes utilisée dans des documents de sécurité

(43) Veröffentlichungstag der Anmeldung: 20.03.2013
(73) Patentinhaber: Bundesdruckerei GmbH, 10969 Berlin (DE)
(72) Erfinder: Muth, Oliver, 12277 Berlin (DE); Pflughoefft, Malte, 13347 Berlin (DE)
(74) Vertreter: Engel, Christoph Klaus

(56) Entgegenhaltungen:
- DE-A1- 10 208 397
- DE-A1- 10 322 794
- GB-A- 2 258 659
- US-A- 6 132 642
- US-A1- 2002 130 303

## Beschreibung

Die vorliegende Erfindung betrifft einen Anti-Stokes-Leuchtstoff zur Anwendung als Sicherheitsmerkmal in Sicherheitsdokumenten, beispielsweise in Briefmarken oder Banknoten. Bei diesen Anwendungen dient der Anti-Stokes-Leuchtstoff zur Kodierung, Identifizierung und Echtheitsprüfung des Sicherheitsdokuments. Im Weiteren betrifft die Erfindung ein den erfindungsgemäßen Anti-Stokes-Leuchtstoff enthaltenes Sicherheitsmerkmal und ein mit dem Sicherheitsmerkmal versehenes Sicherheitsdokument.

In der DE 25 47 768 A1 wird die Verwendung von Anti-Stokes-Leuchtstoffen, wie beispielsweise LnF₃:Yb³⁺,Er³⁺ als Markierung in Ausweisdokumenten gezeigt.

Die GB 2 258 659 A zeigt einen Anti-Stokes-Leuchtstoff, welcher ein Yttriumoxysulfid umfasst, in welches 4 - 50 Gew.% Er und/oder Yb sowie 1 - 50 ppm eines Lanthanoids dotiert sind.

Die GB 2 258 660 A zeigt einen Anti-Stokes-Leuchtstoff, welcher aus einer geschmolzenen Mischung mehrerer Selten-Erd-Verbindungen hergestellt ist und in Form von Partikeln einer Größe von nicht mehr als 40 µm ausgebildet ist. Der Anti-Stokes-Leuchtstoff umfasst bevorzugt ein dotiertes Yttriumoxysulfid.

In Shionoya, S. et al.: "Phosphor Handbook", CRC Press 1999, Seiten 108-109, wird die Abhängigkeit der Konzentrationslöschung von der Konzentration eines Aktivatorions für einen ausgewählten Leuchtstoff gezeigt.

In Bergmann, Schaefer: "Lehrbuch der Experimentalphysik: Festkörper", Band 6, de Gruyter, 1. Auflage, 1992, Seite 721, wird erläutert, dass die Quantenausbeute der Fluoreszenz bei vielen Festkörpern bei steigender Konzentration abnimmt, und es wird beschrieben, worauf dies zurückzuführen ist.

In der Dissertation von Riwotzki, K. "Synthese und optische Untersuchung seltenerd-dotierter, lumineszierender Nanokristallite", Universität Hamburg, 01. März 2001, Seite 40, werden die Ursachen der Konzentrationslöschung beschrieben.

In der Diplomarbeit von Kauffmann, C.: "Photophysikalische Untersuchungen von Mineralölen mit Hilfe von UV/VIS-Absorptionsmessungen stationärer und zeitaufgelöster Fluoreszenzspektroskopie", Friedrich-Alexander-Universität Erlangen-Nürnberg, 1997, Seiten 14-16, werden Messungen der Konzentrationslöschung vorgestellt und in einem Messdiagramm dargestellt.

In der WO 02/20695 A1 werden die nachteiligen Auswirkungen der Konzentrationslöschung erörtert.

In der US 5,563,979 werden erbium-dotierte Gläser gezeigt, welche ein Material zur Modifikation, z. B. Lanthanoxid umfassen. Es wird darauf hingewiesen, dass die Konzentrationslöschung zu einer Reduktion der Lebensdauer führt, beispielsweise bei einer Konzentration des Erbiums im Verhältnis zum Silizium von mehr als 0,01.

Die US 5,698,397 zeigt die Verwendung von Up-Conversion-Leuchtstoffen zur Analyse von biologischen Proben. Die Leuchtstoffe werden als Markierungselemente an die biologischen Proben angebracht, um diese wiedererkennen zu können, beispielsweise mit dem Ziel, Viren mithilfe eines Mikroskops finden zu können. Als Leuchtstoff wird u. a. (Gd_{0,87}Yb_{0,13}Tm_{0,001})₂O₂S angeführt. Ytterbium fungiert dabei als Absorberion, während Thulium als Emitterion fungiert.

Die US 6,132,642 beschreibt ein Verfahren zur Herstellung von Leuchtstoffpartikeln mit einer Größe von etwa 1 µm und mit einer sphärischen Oberfläche. Solche Leuchtstoffe sollen als Up-Conversion-Leuchtstoffe in Immunofluoreszenz-Anwendungen verwendet werden, beispielsweise zum Nachweis von Antikörper-Antigen-Reaktionen, wofür die Leuchtstoffe an organische Zellen anzukoppeln sind. Daher ist die Partikelgröße klein zu halten und eine sphärische Oberfläche der Partikel zu schaffen. Bei dem Leuchtstoff kann es sich beispielsweise um ein Gadoliniumoxysulfid handeln, welches mit einem der Paare Ytterbium/Erbium, Ytterbium/Thulium oder Ytterbium/Holmium aktiviert ist. Der Anteil des Ytterbiums beträgt bevorzugt zwischen 10% und 30%. Der Anteil des Thuliums beträgt bevorzugt zwischen 0,1 und 0,05% [sic].

Die WO 00/60527 A1 lehrt ein Verfahren, bei welchem eine gepulste Laser-Strahlung zur Anregung eines Anti-Stokes-Leuchtstoffes genutzt wird. Als Anti-Stokes-Leuchtstoffe werden u. a. Y₂O₂S:Er,Yb und Y₂O₂S:Tm,Yb genannt.

Die EP 0 299 09 A2 zeigt einen radiographischen Verstärkungsschirm mit einer Leuchtstoffschicht der chemischen Formel (Ln_{1-x-y},Tbₓ,A_{y})₂O₂S, wobei Ln aus der Gruppe bestehend aus Y, La, Gd und Lu ausgewählt ist, während A aus der Gruppe bestehend Ce, Pr, Nd, Dy, Er und Tm ausgewählt ist. Es gilt 0,002 ≤ x ≤ 0,20 und 0 ≤ y ≤ 0,01.

Die DE 102 08 397 A1 zeigt eine Anti-Stokes-Leuchtstoffzusammensetzung der allgemeinen chemischen Formel (Mₓ, Yb_{y}, Tm_{z})₂O₂S, wobei y bevorzugt im Bereich zwischen 0,15 und 0,3 liegt, während z bevorzugt im Bereich zwischen 0,0025 und 0,03, besonders bevorzugt zwischen 0,0075 und 0,02 liegt. M kann durch Yttrium, Gadolinium oder Lanthan gebildet sein. Die Anti-Stokes-Leuchtstoffzusammensetzung kann als Markierung in Chipkarten, Ausweise, Banknoten oder Urkunden zur Vermeidung von Fälschungen eingebracht werden.

Die DE 103 22 794 A1 zeigt einen Sensor zur Echtheitserkennung eines lumineszierenden Sicherheitselementes. Als Sicherheitselement können bevorzugt Anti-Stokes-Pigmente der Zusammensetzung (Gd_{1-x-y},Ybₓ,Tm_{y})₂O₂S mit 0,20 ≤ x ≤ 0,60 und 0,0001 ≤ y ≤ 0,05 verwendet werden. Durch eine Wahl der Konzentrationen des Ytterbiums, des weiteren Seltenerd-Metalls sowie weiterer Kationen und/oder Anionen kann die An- und Abklingzeit auf einen Bereich zwischen 1 µs und 200 µs eingestellt werden, insbesondere zwischen 10 µs und 50 µs.

Die US 2002/130303 A1 zeigt ein Sicherheitsdokument mit einem Anti-Stokes-Leuchtstoff, welcher eine Zusammensetzung der chemischen Formel (Gd_{1-x-y},Ybₓ,Tm_{y})₂O₂S aufweist. Der Leuchtstoff ermöglicht Auslesegeschwindigkeiten zwischen 3m/s und 6m/s. Es wird darauf hingewiesen, dass in kleinen Teilbereichen angegebener Wertebereiche des Leuchtstoffes eine Konzentrationslöschung der Anti-Stokes-Lumineszenz auftritt, wodurch eine kurze Abklingzeit bewirkt wird.

Die EP 1 241 242 A2 zeigt einen Anti-Stokes-Leuchtstoff für die Anwendung in Sicherheitsdokumenten, welcher eine Zusammensetzung der chemischen Formel (Gd_{1-x-y},Ybₓ,Tm_{y})₂O₂S aufweist. Ytterbium wirkt als Absorberion zur Absorption von elektromagnetischer Strahlung, während Thulium als Emitterion zur Emission von elektromagnetischer Strahlung wirkt. Die Konzentrationen der Absorberionen und der Emitterionen sind zur Variation der Anklingzeiten und/oder der Abklingzeiten des Anti-Stokes-Leuchtstoffes so gewählt, dass eine anteilige Löschung der Anti-Stokes-Lumineszenz auftritt. Dabei gilt bevorzugt 0,05 ≤ x ≤ 0,80 und 0,0001 ≤ y ≤ 0,1 sowie besonders bevorzugt 0,20 ≤ x ≤ 0,60 und 0,0001 ≤ y ≤ 0,05. Darüber hinausgehende Vorgaben zur Wahl von x und y mit dem Ziel anpassbarer Ankling- und Abklingzeiten sind nicht angegeben.

Die Aufgabe der vorliegenden Erfindung besteht darin, einen Anti-Stokes-Leuchtstoff für die Anwendung in Sicherheitsdokumenten bereitzustellen, wobei die Ankling- und Abklingzeiten eine anteilige Konzentrationslöschung der Anti-Stokes-Lumineszenz definiert einstellbar sind.

Die genannte Aufgabe wird durch einen Anti-Stokes-Leuchtstoff gemäß dem beigefügten Anspruch 1 gelöst. Die Aufgabe wird weiterhin durch ein Sicherheitsmerkmal gemäß dem beigefügten Anspruch 6 und durch ein Sicherheitsdokument gemäß dem beigefügten Anspruch 7 gelöst.

Bei dem erfindungsgemäßen Leuchtstoff handelt es sich um einen Anti-Stokes-Leuchtstoff, welcher auch als Up-Conversion-Leuchtstoff bezeichnet wird. Der Anti-Stokes-Leuchtstoff gemäß der vorliegenden Erfindung ist zur Anwendung in Sicherheitsdokumenten ausgebildet, wofür er spezielle Eigenschaften aufweisen muss. Beispielsweise muss der erfindungsgemäße Anti-Stokes-Leuchtstoff so beschaffen sein, dass er in das Sicherheitsdokument unauffällig eingebracht werden kann.

Ferner muss er eindeutig identifizierbar sein. Hingegen soll es einem Unberechtigten nur schwer möglich sein, den erfindungsgemäßen Anti-Stokes-Leuchtstoff auffinden zu können. Im Gegensatz zu anderen Anwendungen von Leuchtstoffen muss der erfindungsgemäße Anti-Stokes-Leuchtstoff zur Anwendung in Sicherheitsdokumenten nicht derart ausgebildet sein, dass er eine möglichst hohe Effizienz aufweist.

Aufgrund der Anti-Stokes-Eigenschaft ist die Wellenlänge einer emittierten elektromagnetischen Strahlung des erfindungsgemäßen Anti-Stokes-Leuchtstoffes kürzer als die Wellenlänge einer vom erfindungsgemäßen Anti-Stokes-Leuchtstoff absorbierten elektromagnetischen Strahlung. Beispielsweise kann der erfindungsgemäße Anti-Stokes-Leuchtstoff derart ausgebildet sein, dass vergleichsweise energiearme infrarote Anregungsstrahlung in energiereichere Strahlung umgewandelt wird. Die emittierte Strahlung kann sowohl im sichtbaren als auch im nicht sichtbaren Wellenlängenbereich liegen.

Der erfindungsgemäße Anti-Stokes-Leuchtstoff weist ein Gadoliniumoxysulfid-Grundgittermaterial der Zusammensetzung Gd₂O₂S auf, in welches Ytterbium und Thulium dotiert sind. Die Ionen des Ytterbium und des Thulium nehmen Gitterplätze des Gadoliniums ein. Der erfindungsgemäße Anti-Stokes-Leuchtstoff kann durch die chemische Formel (Gd_{1-x-y}YbₓTm_{y})₂O₂S oder auch durch die Formel (Gd_{1-x-y})₂O₂S:YbₓTm_{y} beschrieben werden, wobei die Variablen x und y die Anteile von Yb und Tm im erfindungsgemäßen Anti-Stokes-Leuchtstoff repräsentieren. Da die Anteile der dotierten Elemente zumeist recht klein sind, ist es mitunter auch üblich, auf deren Angabe zu verzichten, wodurch man zu der vereinfachten Formel Gd₂O₂S:Yb,Tm gelangt. In dem erfindungsgemäßen Anti-Stokes-Leuchtstoff wirkt Yb als Absorberion zur Absorption von elektromagnetischer Strahlung. Das Tm wirkt als Emitterion zur Emission von elektromagnetischer Strahlung. Die Charakteristik der vom erfindungsgemäßen Anti-Stokes-Leuchtstoff emittierten elektromagnetischen Strahlung hängt insbesondere von den Konzentrationen des Yb und/oder des Tm ab.

Erfindungsgemäß beträgt die Konzentration der Absorberionen Yb zwischen 7,5 Gew.-% und 35 Gew.-%, während die Konzentration der Emitterionen Tm zwischen 0,05 Gew.-% und 0.75 Gew.-% beträgt. Die genannten Prozentangaben beziehen sich auf das Gewicht des Leuchtstoffes in seiner Gesamtheit und können auch als Massenanteil aufgefasst werden. Bei den angegebenen Konzentrationen der Absorberionen und Emitterionen tritt eine anteilige Löschung der Anti-Stokes-Lumineszenz auf, die auch als Konzentrationslöschung bezeichnet wird. Im Weiteren hat dies zur Folge, dass der erfindungsgemäße Anti-Stokes-Leuchtstoff Anklingzeiten und Abklingzeiten seiner Lumineszenz aufweist, durch welche er für eine Anwendung in Sicherheitsdokumenten besonders geeignet ist. Im Vergleich zum nächstliegenden Stand der Technik gibt die vorliegende Erfindung vergleichsweise enge Bereiche für die Konzentrationen der Absorberionen und der Emitterionen vor, mit denen Anklingzeiten und Abklingzeiten erzielt werden, durch welche der Anti-Stokes-Leuchtstoff für eine Anwendung in den Sicherheitsdokumenten geeignet ist. Es handelt sich bei der vorliegenden Erfindung somit um eine Auswahlerfindung gegenüber dem nächstliegenden Stand der Technik.

Grundsätzlich weisen Anti-Stokes-Leuchtstoffe im Vergleich zu Photo- oder Kathodoleuchtstoffen relativ lange Anklingzeiten auf, was bei der Detektion des Anti-Stokes-Leuchtstoffes zu berücksichtigen ist. Insbesondere bei der Anwendung in Sicherheitsdokumenten muss ein entsprechendes Anregungs- und Detektionssystem so konfiguriert sein, dass es den Anti-Stokes-Leuchtstoff trotz der langen Anklingzeit erkennen kann. Hierzu müssen die Anklingzeiten und Abklingzeiten des Anti-Stokes-Leuchtstoffes zumindest in bestimmten Grenzen einstellbar sein; insbesondere darf die Anklingzeit einen bestimmten Wert nicht überschreiten. Mit dem erfindungsgemäßen Anti-Stokes-Leuchtstoff werden Anklingzeiten und Abklingzeiten erzielt, die ein Auslesen von mit dem erfindungsgemäßen Anti-Stokes-Leuchtstoff ausgestatteten Sicherheitsdokumenten bei einer relativen Geschwindigkeit zwischen dem Sicherheitsdokument und einem geeigneten Lesesensor im Bereich von 3 m/s bis 10 m/s, vorzugsweise 4 m/s bis 6 m/s ermöglichen. Der erfindungsgemäße Anti-Stokes-Leuchtstoff kann bei einer solchen hohen Geschwindigkeit, bevorzugt mit einem gepulsten Laser angeregt und durch Auswertung der Emission verifiziert werden.

Bei einer bevorzugten Ausführungsform des erfindungsgemäßen Anti-Stokes-Leuchtstoffes beträgt die Konzentration der Absorberionen Yb wenigstens 7,5 Gew.-%, bevorzugt wenigstens 13 Gew.-%, weiterhin bevorzugt wenigstens 20 Gew.-%. Die Konzentration der Absorberionen Yb beträgt dabei höchstens 35 Gew.-%, vorzugsweise höchstens 32 Gew.-%, weiterhin bevorzugt höchstens 30 Gew.-%. Bevorzugt liegt die Konzentration der Absorberionen Yb zwischen 7,5 Gew.-% und 35 Gew.-%, vorzugsweise 13 Gew.-% und 32 Gew.-%, weiterhin bevorzugt 20 Gew.-% und 30 Gew.-%. In diesem Konzentrationsbereich ist die durch die Konzentrationslöschung bedingte Einstellung der Anklingzeiten und Abklingzeiten für das Verifizieren des erfindungsgemäßen Anti-Stokes-Leuchtstoffes als Sicherheitsmerkmal besonders optimal.

Die Konzentration der Emitterionen Tm beträgt wenigstens 0,05 Gew.-%, bevorzugt wenigstens 0,5 Gew.-%. Die Konzentration der Emitterionen Tm beträgt dabei höchstens 0,1 Gew.-%, bevorzugt höchstens 0,75 Gew.-%. Die Konzentration der Emitterionen Tm beträgt bevorzugt zwischen 0,05 Gew.-% und 0,1 Gew.-% oder alternativ bevorzugt zwischen 0,5 Gew.-% und 0,75 Gew.-%. In diesen Bereichen der Konzentration der Emitterionen Tm weisen die Anklingzeiten und die Abklingzeiten optimale Werte für die Anwendung des erfindungsgemäßen Anti-Stokes-Leuchtstoffes als Sicherheitsmerkmal in Sicherheitsdokumenten auf.

Der erfindungsgemäße Anti-Stokes-Leuchtstoff ist derart ausgebildet, dass er eine Anklingzeit zwischen 100 µs und 1000 µs, bevorzugt zwischen 400 µs und 1000 µs aufweist, was insbesondere durch die Wahl der Konzentrationen der Absorberionen und Emitterionen in den oben genannten Wertebereichen erzielt werden kann.

Der erfindungsgemäße Anti-Stokes-Leuchtstoff ist bevorzugt derart ausgebildet, dass er eine Abklingzeit von weniger als 300 µs und besonders bevorzugt von weniger als 100 µs aufweist. Ferner ist der erfindungsgemäße Anti-Stokes-Leuchtstoff bevorzugt derart ausgebildet, dass er eine Abklingzeit von mehr als 1 µs und besonders bevorzugt von mehr als 10 µs aufweist. Derartige Abklingzeiten sind durch eine Wahl der Konzentrationen der Absorberionen und Emitterionen in den oben genannten Wertebereichen erzielbar.

Die Anklingzeit und die Abklingzeit des erfindungsgemäßen Anti-Stokes-Leuchtstoffes lassen sich dadurch einstellen, dass die Konzentrationen der Absorberionen und der Emitterionen in den oben genannten Wertebereichen eingestellt werden. Bei einer bevorzugten Ausführungsform des erfindungsgemäßen Anti-Stokes-Leuchtstoffes beträgt die Konzentration der Absorberionen Yb ca. 13 Gew.-%, während die Konzentration der Emitterionen Tm ca. 0,05 Gew.-% beträgt. Bei dieser Ausführungsform beträgt die Anklingzeit der Lumineszenz des Anti-Stokes-Leuchtstoffes zwischen 400 und 450 µs, während die Abklingzeit der Lumineszenz des Anti-Stokes-Leuchtstoffes zwischen 250 und 310 µs beträgt.

Bei einer anderen bevorzugten Ausführungsform des erfindungsgemäßen Anti-Stokes-Leuchtstoffes beträgt die Konzentration der Absorberionen Yb ca. 7,5 Gew.-%, während die Konzentration der Emitterionen Tm ca. 0,75 Gew.-% beträgt. Bei dieser Ausführungsform des erfindungsgemäßen Anti-Stokes-Leuchtstoffes beträgt die Anklingzeit der Lumineszenz des Anti-Stokes-Leuchtstoffes zwischen 950 und 990 µs, während die Abklingzeit der Lumineszenz des Anti-Stokes-Leuchtstoffes zwischen 70 und 110 µs beträgt.

Die beiden genannten bevorzugten Ausführungsformen des erfindungsgemäßen Anti-Stokes-Leuchtstoffes belegen exemplarisch für konkret angegebene chemische Zusammensetzungen die daraus resultierenden Anklingzeiten und Abklingzeiten und die sich hierdurch ergebende Eignung als Sicherheitsmerkmal in einem Sicherheitsdokument. Die angegebenen Werte für die Konzentrationen und die Zeiten verstehen sich unter Beachtung der üblichen Toleranzen, welche dem Fachmann bekannt sind.

Das Gadolinium im Grundgittermaterial kann anteilig ersetzt sein; beispielsweise durch Yttrium, Lanthan und/oder Lutetium. Dieser partielle Ersatz ändert nichts an den grundsätzlichen Eigenschaften des erfindungsgemäßen Anti-Stokes-Leuchtstoffes.

Die Anklingzeit und die Abklingzeit der Lumineszenz des erfindungsgemäßen Anti-Stokes-Leuchtstoffes können auch durch weitere Maßnahmen beeinflusst werden. Insbesondere können außer dem Ytterbium und dem Thulium weitere Kationen und/oder Anionen in das Grundgittermaterial eingebaut sein, um die Anklingzeit und die Abklingzeit der Lumineszenz des erfindungsgemäßen Anti-Stokes-Leuchtstoffes zu beeinflussen. Die weiteren Kationen und/oder Anionen haben die Eigenschaft, in die Wechselwirkung zwischen den Ytterbium- und den Thuliumionen einzugreifen, wobei die stationäre Anti-Stokes-Lumineszenz nur unwesentlich beeinflusst wird, während die Anklingzeit und die Abklingzeit deutlich reduziert werden können.

Bei einer bevorzugten Ausführungsform des erfindungsgemäßen Anti-Stokes-Leuchtstoffes liegt die emittierte elektromagnetische Strahlung im sichtbaren oder im nicht sichtbaren Lichtbereich, während die absorbierte elektromagnetische Strahlung im infraroten Bereich liegt.

Der erfindungsgemäße Anti-Stokes-Leuchtstoff ist derart beschaffen, dass er sich als Sicherheitsmerkmal für ein Sicherheitsdokument, beispielsweise für eine Briefmarke, eine Banknote, einen Ausweis, einen Pass, eine Verpackung, einen Aufkleber, einen Fahrausweis, eine Eintrittskarte, ein Steuerzeichen oder eine Aktie eignet.

Das erfindungsgemäße Sicherheitsmerkmal dient zur Verwendung an einem Sicherheitsdokument und enthält einen erfindungsgemäßen Anti-Stokes-Leuchtstoff. Das erfindungsgemäße Sicherheitsmerkmal kann auch mehrere erfindungsgemäße Anti-Stokes-Leuchtstoffe enthalten, oder auch weitere Leuchtstoffe oder Sicherheitselemente umfassen. Das Sicherheitsmerkmal kann beispielsweise verdruckt werden. Zum Vordrucken können die dem Fachmann bekannten Druckverfahren verwendet werden, z.B. Tintenstrahldruck, Offset, Stichdruck, Tiefdruck, Siebdruck usw.

Das erfindungsgemäße Sicherheitsdokument umfasst das erfindungsgemäße Sicherheitsmerkmal und kann beispielsweise eine Briefmarke, eine Banknote, ein Ausweis, ein Führerschein oder eine Bank- oder Kreditkarte sein.

## Patentansprüche

1. Anti-Stokes-Leuchtstoff zur Anwendung in Sicherheitsdokumenten, bei welchem die Wellenlänge einer emittierten elektromagnetischen Strahlung kürzer als die Wellenlänge einer absorbierten elektromagnetischen Strahlung ist und welcher ein Gadoliniumoxysulfid-Grundgittermaterial der Zusammensetzung Gd₂O₂S aufweist, in welches Ytterbium und Thulium dotiert sind, wobei
- Yb als Absorberion zur Absorption von elektromagnetischer Strahlung wirkt;
- Tm als Emitterion zur Emission von elektromagnetischer Strahlung wirkt;
- die Konzentration der Absorberionen Yb zwischen 7,5 Gew.-% und 35 Gew.-% beträgt und die Konzentration der Emitterionen Tm zwischen 0,05 Gew.-% und 0,1 Gew.-% beträgt, wodurch eine anteilige Löschung der Anti-Stokes-Lumineszenz auftritt und der Anti-Stokes-Leuchtstoff für die Anwendung in Sicherheitsdokumenten geeignete Anklingzeiten und Abklingzeiten aufweist; und
- der Anti-Stokes-Leuchtstoff eine Anklingzeit zwischen 100 µs und 1000 µs aufweist.

2. Anti-Stokes-Leuchtstoff nach Anspruch 1, **dadurch gekennzeichnet, dass** die Konzentration der Absorberionen Yb zwischen 13 Gew.-% und 32 Gew.-% beträgt.

3. Anti-Stokes-Leuchtstoff nach Anspruch 1 oder 2, **dadurch gekennzeichnet, dass** er eine Abklingzeit von weniger als 300 µs aufweist.

4. Anti-Stokes-Leuchtstoff nach Anspruch 3, **dadurch gekennzeichnet, dass** er eine Abklingzeit von weniger als 100 µs aufweist.

5. Anti-Stokes-Leuchtstoff nach einem der Ansprüche 1 bis 4, **dadurch gekennzeichnet, dass** die emittierte elektromagnetische Strahlung im sichtbaren oder nicht-sichtbaren Lichtbereich liegt, während infrarote elektromagnetische Strahlung absorbiert wird.

6. Sicherheitsmerkmal zur Verwendung an einem Sicherheitsdokument, **dadurch gekennzeichnet, dass** es einen Anti-Stokes-Leuchtstoff nach einem der Ansprüche 1 bis 5 enthält.

7. Sicherheitsdokument, **dadurch gekennzeichnet, dass** es ein Sicherheitsmerkmal nach Anspruch 6 umfasst.

## Claims

1. An anti-Stokes phosphor for use in security documents, in which the wavelength of emitted electromagnetic radiation is shorter than the wavelength of absorbed electromagnetic radiation and which has a gadolinium oxysulfide basic grid material with the composition Gd₂O₂S doped with ytterbium and thulium, wherein
- Yb acts as the absorber ion for absorbing electromagnetic radiation;
- Tm acts as the emitter ion for emitting electromagnetic radiation;
- the concentration of absorber ions Yb is between 7.5 % by wt. and 35 % by wt. and the concentration of emitter ions Tm is between 0.05 % by wt. and 0.1 % by wt., wherein a proportionate quenching of the anti-Stokes luminescence takes place and the anti-Stokes luminescence has build-up times and decay times suitable for use in security documents; and
- the anti-Stokes phosphor has a build-up time of between 100 µs and 1000 µs.

2. The anti-Stokes phosphor according to claim 1, **characterized in that** the concentration of absorber ions Yb is between 13 % by wt. and 32 % by wt.

3. The anti-stokes phosphor according to claim 1 or 2, **characterized in that** it has a decay time of fewer than 300 µs.

4. The anti-stokes phosphor according to claim 3, **characterized in that** it has a decay time of fewer than 100 µs.

5. The anti-stokes phosphor according to one of the claims 1 to 4, **characterized in that** the emitted electromagnetic radiation lies in the visible or non-visible light spectrum, while infrared electromagnetic radiation is absorbed.

6. A security feature for use on a security document, **characterized in that** it contains an anti-Stokes phosphor according to one of the claims 1 to 5.

7. A security document **characterized in that** it includes a safety feature according to claim 6.

## Revendications

1. Substance luminescente anti-Stokes, destinée à être utilisée dans des documents de sécurité, chez laquelle la longueur d'onde d'un rayonnement électromagnétique émis est plus courte que la longueur d'onde d'un rayonnement électromagnétique absorbé et qui comporte une matière de réseau de base en sulfure d'oxyde de gadolinium de composition Gd₂O₂S dopée à l'ytterbium et au thulium,
- Yb agissant en tant qu'ion absorbeur pour l'absorption d'un rayonnement électromagnétique ;
- Tm agissant en tant qu'ion émetteur pour l'émission d'un rayonnement électromagnétique ;
- la concentration en ions absorbeurs Yb se situant entre 7,5 % en poids et 35 % en poids et la concentration en ions émetteurs Tm se situant entre 0,05 % en poids et 0,1 % en poids, ce qui donne lieu à une extinction proportionnelle de la luminescence anti-Stokes et la substance luminescente présentant des temps d'établissement et des temps de relâchement adaptés pour l'utilisation dans des documents de sécurité ; et
- la substance luminescente anti-Stokes présentant un temps d'établissement compris entre 100 µs et 1000 µs.

2. Substance luminescente anti-Stokes selon la revendication 1, **caractérisée en ce que** la concentration en ions absorbeurs Yb se situe entre 13 % en poids et 32 % en poids.

3. Substance luminescente anti-Stokes selon la revendication 1 ou la revendication 2, **caractérisée en ce qu'**elle présente un temps de relâchement inférieur à 300 µs.

4. Substance luminescente anti-Stokes selon la revendication 3, **caractérisée en ce qu'**elle présente un temps de relâchement inférieur à 100 µs.

5. Substance luminescente anti-Stokes selon l'une quelconque des revendications 1 à 4, **caractérisée en ce que** le rayonnement électromagnétique émis se situe dans la plage de lumière visible ou non visible, alors qu'un rayonnement électromagnétique infrarouge est absorbé.

6. Caractéristique de sécurité destinée à être utilisée dans un document de sécurité, **caractérisée en ce qu'**elle contient une substance luminescente anti-Stokes selon l'une quelconque des revendications 1 à 5.

7. Document de sécurité, **caractérisé en ce qu'**il comprend une caractéristique de sécurité selon la revendication 6.
